# EUROPEAN PATENT APPLICATION

(11) **EP 3 767 948 A1**
(43) Date of publication of application: **20.01.2021**
(21) Application number: 20195656.2
(22) Date of filing: 17.01.2013
(51) Int. Cl.: H04N 19/117, H04N 19/157, H04N 19/17, H04N 19/46, H04N 19/50, H04N 19/51, H04N 19/625, H04N 19/82

(54) **IN-LOOP FILTERING FOR LOSSLESS CODING MODE IN HIGH EFFICIENCY VIDEO CODING**

(30) Priority: 17.01.2012 US 201261587451 P
(62) Divisional of application: 13701892.5
(71) Applicant: Huawei Technologies Co., Ltd., Longgang District Shenzhen Guangdong 518129 (CN)
(72) Inventor: GAO, Wen, West Windsor, New Jersey 08550 (US); YU, Haoping, Carmel, Indiana 46032 (US)
(74) Representative: Thun, Clemens

(57) **Abstract**

An apparatus comprising a processor configured to generate a reconstructed pixel, selectively bypass at least one in-loop filter on the reconstructed pixel, and generate a prediction pixel for a current pixel using at least the reconstructed pixel when the at least one in-loop filter is bypassed.

## Description

### STATEMENT REGARDING FEDERALLY SPONSORED RESEARCH OR DEVELOPMENT

Not applicable.

### REFERENCE TO A MICROFICHE APPENDIX

Not applicable.

### BACKGROUND

The amount of video data needed to depict even a relatively short film can be substantial, which may result in difficulties when the data is to be streamed or otherwise communicated across a communications network with limited bandwidth capacity. Thus, video data is generally compressed before being communicated across modern day telecommunications networks. Video compression devices often use software and/or hardware at the source to code the video data prior to transmission, thereby decreasing the quantity of data needed to represent digital video images. The compressed data is then received at the destination by a video decompression device that decodes the video data. With limited network resources and ever increasing demands of higher video quality, improved compression and decompression techniques that improve compression ratio with little to no sacrifice in image quality are desirable.

For example, video compression may use reconstructed pixels or samples for prediction of a block. Further, the reconstructed pixels may be filtered (e.g., modified in pixel value) to remove certain effects, such as deblocking artifacts on the edges of blocks. Sometimes, when no information loss is induced in video compression, filtering of pixels may actually degrade visual quality instead of improving it. Thus, this issue may need to be addressed.

### SUMMARY

In one embodiment, the disclosure includes an apparatus comprising a processor configured to generate a reconstructed pixel, selectively bypass at least one in-loop filter on the reconstructed pixel, and generate a prediction pixel for a current pixel using at least the reconstructed pixel when the at least one in-loop filter is bypassed.

In another embodiment, the disclosure includes a method of video coding comprising generating a reconstructed pixel, selectively bypassing an in-loop filtering step on the reconstructed pixel, and generating a prediction pixel for a current pixel using at least the reconstructed pixel when the in-loop filtering step is bypassed.

In yet another embodiment, the disclosure includes an apparatus comprising An apparatus comprising a processor configured to determine whether a residual block is coded in a lossless mode, generate a reconstructed block based on the residual block, if the residual block has been coded in the lossless mode, disable an in-loop filtering step on the reconstructed block; and predict a current pixel by directly using at least one reconstructed pixel in the reconstructed block as reference, and otherwise, perform the in-loop filtering step on the reconstructed block to generate a filtered block, and predict the current pixel by using at least one filtered pixel in the filtered block as reference.

These and other features will be more clearly understood from the following detailed description taken in conjunction with the accompanying drawings and claims.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
FIG. 1 is a schematic diagram of an embodiment of a lossy encoding scheme.
FIG. 2 is a schematic diagram of an embodiment of a lossless encoding scheme.
FIG. 3 is a schematic diagram of an embodiment of an in-loop filtering bypass encoding scheme.
FIG. 4 is a schematic diagram of an embodiment of an in-loop filtering bypass decoding scheme.
FIG. 5 is a schematic diagram of an embodiment of in-loop filtering bypassing scheme.
FIG. 6 is a flowchart of an embodiment of an in-loop filtering bypass coding method.
FIG. 7 is a schematic diagram of an embodiment of a network node.

### DETAILED DESCRIPTION

It should be understood at the outset that, although an illustrative implementation of one or more embodiments are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

Video media may involve displaying a sequence of still images or frames in relatively quick succession, thereby causing a viewer to perceive motion. Each frame may comprise a plurality of picture samples or pixels, each of which may represent a single reference point in the frame. During digital processing, each pixel may be assigned an integer value (e.g., 0, 1, ..., or 255) that represents an image quality or characteristic, such as luminance (luma or Y) or chrominance (chroma including U and V), at the corresponding reference point. In use, an image or video frame may comprise a large amount of pixels (e.g., 2,073,600 pixels in a 1920×1080 frame), thus it may be cumbersome and inefficient to encode and decode (referred to hereinafter simply as code) each pixel independently. To improve coding efficiency, a video frame is usually broken into a plurality of rectangular blocks or macroblocks, which may serve as basic units of processing such as prediction, transform, and quantization. For example, a typical NxN block may comprise N² pixels, where N is an integer and often a multiple of four.

In working drafts of high efficiency video coding (HEVC), which is issued by the International Telecommunications Union (ITU) Telecommunications Standardization Sector (ITU-T) and the International Organization for Standardization (ISO)/International Electrotechnical Commission (IEC) and poised to be a future video standard, new block concepts have been introduced. For example, coding unit (CU) may refer to a sub-partitioning of a video frame into square blocks of equal or variable size. In HEVC, a CU may replace a macroblock structure of previous standards. Depending on a mode of inter or intra prediction, a CU may comprise one or more prediction units (PUs), each of which may serve as a basic unit of prediction. For example, for intra prediction, a 64x64 CU may be symmetrically split into four 32x32 PUs. For another example, for an inter prediction, a 64x64 CU may be asymmetrically split into a 16x64 PU and a 48x64 PU. Similarly, a CU may comprise one or more transform units (TUs), each of which may serve as a basic unit for transform and/or quantization. For example, a 32x32 CU may be symmetrically split into four 16x16 TUs. Multiple TUs of one CU may share a same prediction mode, but may be transformed separately. Herein, the term block may generally refer to any of a macroblock, CU, PU, or TU.

Depending on the application, a block may be coded in either a lossless mode (i.e., no distortion or information loss) or a lossy mode (i.e., with distortion). In use, high quality videos may be coded using a lossless mode, while medium or low quality videos may be coded using a lossy mode. Sometimes, a single video frame or slice may employ both lossless and lossy modes to code a plurality of regions, which may be rectangular or irregular in shape. Each region may comprise a plurality of blocks. For example, a compound video may comprise a combination of different types of contents, such as texts, computer graphics, and natural-view content (e.g., camera-captured video). In a compound frame, regions of texts and graphics may be coded in a lossless mode, while regions of natural-view content may be coded in a lossy mode. Lossless coding of texts and graphics may be desired, e.g. in computer screen sharing applications, since lossy coding may lead to poor quality or fidelity of texts and graphics and cause eye fatigue.

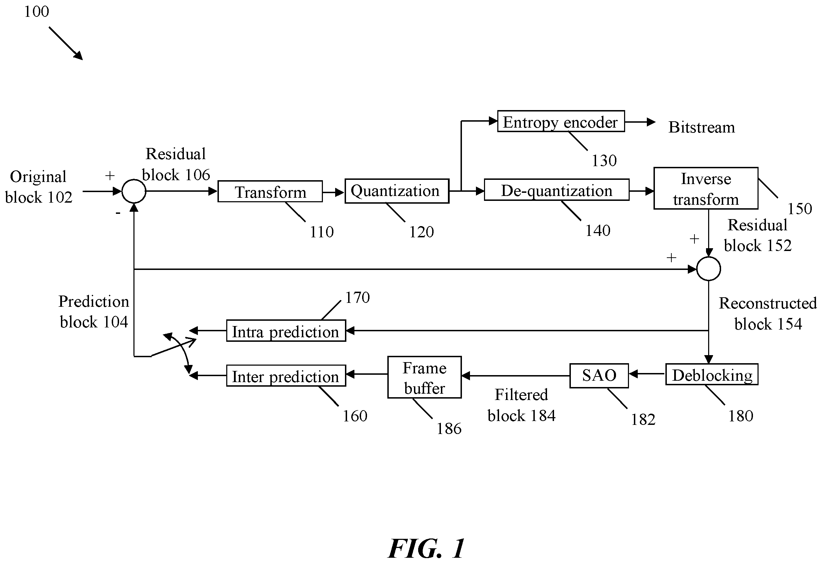

FIG. 1 is a schematic diagram of an embodiment of a lossy encoding scheme 100, which may be implemented by a video encoder or may represent a functional diagram of a video encoder. A video frame or picture comprising an original block 102 may be fed into the encoder. Note that the original block 102 labeled out in FIG. 1 serves merely as an illustrative example. In practice, a picture may comprise a plurality of original blocks, each of which comprises a plurality of original pixels. Further, pixels in one block may be processed as one or more groups or one-by-one, thus one skilled in the art will recognize that the original block 102 may be modified to indicate original pixels or an original pixel without departing from the principles of this disclosure. The term "original" indicates that the block or pixel has not yet been processed by the scheme 100, thus it is not necessarily limiting the picture to be a raw capture picture, that is, any appropriate processing may be performed on the picture before feeding into the scheme 100.

To encode the original block 102, a prediction block 104 may be generated based on one or more reference blocks, which have been previously coded. A block currently being coded may be referred to as a current block, and a pixel currently being coded in the current block referred to as a current pixel. The prediction block 104 may be an estimated version of the original block 102. A residual block 106 may be generated by subtracting the block 102 from the prediction block 104. The residual block 106 may represent a difference between the original block 102 and the prediction block 104, in other words, prediction residuals or errors. Since an amount of data needed to represent the prediction residuals may typically be less than an amount of data needed to represent the original block 102, the residual block 106 may be encoded to achieve a higher compression ratio.

As shown in FIG. 1, the residual block 106 comprising residual pixels may be fed into a transform module 110. As a result, the residual pixels in a spatial domain may be converted to transform coefficients in a frequency domain by applying a transform matrix. The conversion may be realized through a two-dimensional transform, e.g. a transform that closely resembles or is the same as discrete cosine transform (DCT). Further, in a quantization module 120 that follows the transform module 110, a number of high-index transform coefficients may be reduced to zero, which may be skipped in subsequent entropy encoding steps. After quantization, quantized transform coefficients may be entropy encoded by an entropy encoder 130. The entropy encoder 130 may employ any entropy encoding scheme, such as context-adaptive binary arithmetic coding (CABAC) encoding, exponential Golomb encoding, or fixed length encoding, or any combination thereof. After entropy encoding, the original block may be transmitted by the encoder as part of a bitstream.

Further, to facilitate continuous encoding of original blocks (or other pixels in one original block), the quantized transform coefficients may be fed into a de-quantization module 140, which may perform the inverse of the quantization module 130 and recover a scale of the transform coefficients. Then, the recovered transform coefficients may further feed into an inverse transform module 150, which may perform the inverse of the transform module 110 and convert transform coefficients from a frequency domain to a residual block 152 in a spatial domain.

In the lossy encoding scheme 100, the residual block 106 may be converted to the residual block 152 after going through a series of operations, e.g., including transform, quantization, de-quantization, and inverse transform. Since some or all of these operations may not be fully reversible, information loss may be caused during the conversion process. Thus, the residual block 152 may be only an approximation of the corresponding residual block 106, and usually comprises less non-zero residual pixels for higher compression efficiency. Further, the residual block 152 may be combined with the corresponding prediction block 104 to form a reconstructed block 154, e.g., by adding the two blocks together. Unless otherwise stated, a corresponding block may indicate a block located at a same relative position of a picture. The scheme 100 implements a lossy coding mode, since the reconstructed block 154 may be a lossy version of the original block 102. In the lossy coding mode, the residual block 106 may not be directly entropy coded.

The reconstructed block 154 may be used as a reference block to generate the prediction block 104. Depending on the location of the reconstructed block 154, prediction may be categorized as inter-frame prediction and intra-frame prediction (in short as inter prediction and intra prediction respectively). In use, successive video frames or slices may be substantially correlated, such that a block in a frame does not substantially vary from a corresponding block in a previously coded frame. Inter prediction implemented by an inter prediction module 160 may exploit temporal redundancies in a sequence of frames or pictures, e.g. similarities between corresponding blocks of successive frames, to reduce compression data. In inter prediction, a motion-compensated algorithm may be implemented to calculate a motion vector for a current block in a current frame based on a corresponding block located in one or more reference frames preceding the current frame according to an encoding order.

Similarly, within a video frame, a pixel may be correlated with other pixels within the same frame such that pixel values within a block or across some blocks may vary only slightly and/or exhibit repetitious textures. To exploit spatial correlations between neighboring blocks in the same frame, intra prediction may be implemented by an intra prediction module 170 in a video encoder/decoder (codec) to interpolate the prediction block 104 from one or more previously coded neighboring blocks (including the reconstructed block 154). The encoder and decoder may interpolate the prediction block independently, thereby enabling a substantial portion of a frame and/or image to be reconstructed from the communication of a relatively few number of reference blocks, e.g., blocks positioned in (and extending from) the upper-left hand corner of the frame.

Despite its coding advantages, prediction may carry potential drawbacks. For example, since each residual block, generated by prediction block and original block, may be transformed independently with its selected coefficients quantized and then stored/transmitted, the correlation between adjacent original blocks may not be considered. As a result, when an encoded video frame is reconstructed, the boundary area belonging to different blocks may be processed differently, creating visible discontinuity, which may be referred as blocking artifacts. The severity of these artifacts depends on different levels of compression. In general, the stronger the intensity of quantization, the more severe the potential artifacts. Such a phenomenon, when prominent, may significantly degrade the video quality.

To improve the quality of a reconstructed video frame (e.g., by reducing blocking artifacts), an in-loop filtering step may be performed before prediction. For example, in inter prediction, a deblocking filter 180 may be applied to pixels located on the edges of the reconstructed block 154 to remove or reduce blocking artifacts. The deblocking filter 180 may be applied after an inverse transform in the encoder and before using the reconstructed block 154 as prediction reference for inter prediction. As a result of deblocking filtering, block boundaries may be smoothed, improving the appearance of decoded video frames (particularly at higher compression ratios). Inter smoothing may be applied to vertical and/or horizontal edges of blocks. In many instances, inter smoothing may be applied to both luminance and chrominance data.

After implementing the deblocking filter 180, sometimes the in-loop filtering step may further comprise a sample adaptive offset (SAO) module 182, which may also be configured to modify values of reconstructed pixels. There may be two types of SAO including band offset and edge offset. Take band offset as an example. The SAO module 182 may classify pixels into a set of bands (e.g., 0-255 values evenly classified into 32 bands). In use, each band may have a different offset value assigned by the SAO module 182, which may modify pixel value by this offset value. The SAO module 182 may create a global effect in a picture, which may improve subjective quality and/or achieve objective coding gain.

Although not shown in FIG. 1, depending on the application, other types of in-loop filters may also be included wherever appropriate, such as adaptive loop filtering (ALF) after the SAO module 182. After in-loop filtering, unfiltered pixels in the reconstructed block 154 may be converted to filtered pixels in a filtered block 184. In inter prediction, the filtered block 184 may be stored in a frame buffer 186. One or more reference frames containing multiple reference blocks may be stored in the frame buffer 186. The inter prediction module 160 may search for any reference block in the frame buffer 186 to determine which is the best for inter prediction. Note that although not shown in FIG. 1, intra prediction may also use a buffer to store one or more previously reconstructed blocks.

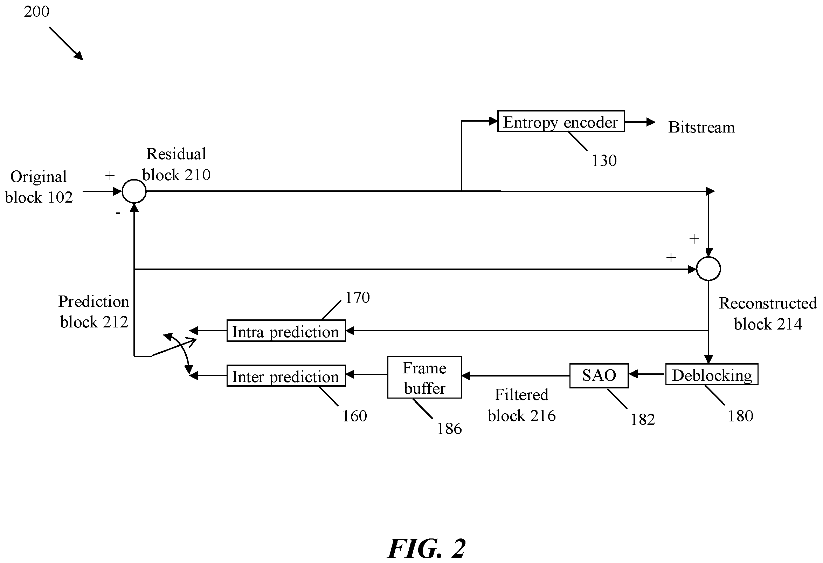

FIG. 2 is a schematic diagram of an embodiment of a lossless encoding scheme 200, which may be implemented by an encoder or may represent a functional diagram of an encoder. One skilled in the art will recognize that various aspects of the scheme 200 (e.g., the original block 102, the entropy encoder 130, the intra prediction module 170, the inter prediction module 160, the frame buffer 186, etc.) may be substantially similar to the scheme 100, thus in the interest of conciseness, further descriptions may focus on the aspects that are different. Unlike the lossy encoding scheme 100, which may transform and quantize a residual block before entropy encoding, the lossless encoding scheme 200 may directly entropy encode a residual block 210 comprising residual pixels. Consequently, information included into a bitstream may be an exact representation of the original block 102, and no information may be lost, that is, a lossless mode. Further, the residual block 210 may be combined with a prediction block 212 to form a reconstructed block 214 comprising reconstructed and unfiltered pixels. As shown in FIG. 2, the reconstructed block 214 may be an exact copy of the original block 102. In this lossless coding mode, a value of each pixel in the block 214 equals a value of each corresponding pixel in the block 102. In the scheme 200, in-loop filtering comprising deblocking and SAO may still be applied to the block 214 to generate a filtered block 216.

Although not shown in FIGS. 1 and 2, one skilled in the art will recognize that corresponding decoding schemes may be implemented accordingly in a decoder. Although the in-loop filtering is shown to be performed on the reconstructed pixels, one skilled in the art will recognize that an in-loop filtering process or step described herein may be implemented anywhere in a coding loop (i.e., circular structure formed in FIGS. 1 and 2). For example, the in-loop filter may be implemented on a prediction block or a residual block. In contrast, an out-of-loop filter may not be included in the coding loop. For example, a post-loop filter right before an entropy encoder but outside the coding loop may not count as an in-loop-filter, thus may not be part of the in-loop filtering step.

For a block employing a lossless coding mode, the reconstructed pixels may be exactly the same as the original pixels without any distortion. In this case, the in-loop filtering step, which may include deblocking filtering, SAO, and/or ALF, may actually distort the pixels. As a result of filtering, the visual quality may be degraded rather than improved.

Disclosed herein are apparatuses, systems, and methods to improve lossless coding by selectively disabling or bypassing the in-loop filtering step. In an embodiment, an indicator may be assigned to a block (e.g., a CU) and used to determine whether in-loop filtering should be bypassed when using pixel(s) in the block as inter prediction reference. The indicator may be a flag used to indicate whether the block has been coded in a lossless coding mode or a lossy coding mode. In-loop filtering may be bypassed when the block has been coded losslessly. Filtering that is bypasses may comprise deblocking, SAO, and/or ALF. By avoiding undesirable filtering on reconstructed pixels whose values are equal to their corresponding original pixels, implementation may be simplified and subject visual quality and coding efficiency may be improved.

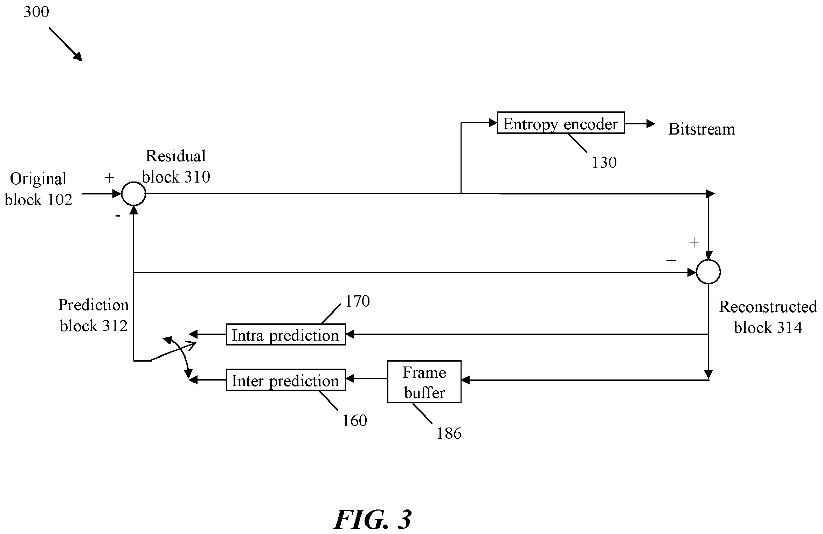

FIG. 3 is a schematic diagram of an embodiment of an in-loop filtering bypass encoding scheme 300, which may be implemented by a video encoder or may represent a functional diagram of an encoder. One skilled in the art will recognize that various aspects of the scheme 300 (e.g., the original block 102, the entropy encoder 130, the intra prediction module 170, the inter prediction module 160, and the frame buffer 186) may be substantially similar to the scheme 100 or scheme 200, thus in the interest of conciseness, further descriptions may focus on the aspects that are different. Since the scheme 300 is a lossless encoding scheme, prediction residuals may be encoded directly without being transformed or quantized. Thus, modules performing transform, quantization, inverse transform, and de-quantization may not be needed. Note that these modules may still be present in the encoder, but disabled or bypassed. In the transform bypass encoding scheme 100, since the residual block is encoded without a transform step or a quantization step, no information loss may be induced in the encoding process.

The lossless encoding scheme 300 may directly entropy encode a residual block 310 comprising residual pixels. Consequently, information included into a bitstream may be an exact representation of the original block 102, and no information may be lost, that is, a lossless mode. Further, the residual block 310 may be combined with a prediction block 312 to form a reconstructed block 314 comprising reconstructed and unfiltered pixels. As shown in FIG. 3, the reconstructed block 314 may be an exact copy of the original block 102. In this lossless coding mode, a value of each pixel in the block 314 equals a value of each corresponding pixel in the block 102. Note that although no transform or inverse transform module is included in the scheme 300, if a transform operation is invertible, no information may be lost, in which case the reconstructed pixels may still be the same as the original pixels. Thus, the schemes herein may include invertible transform operation(s) if desired, as long as no pixel information is lost during coding.

In an embodiment, the scheme 300 further bypasses in-loop filtering, which may be implemented as one or more filters. Reference pixels may be directly used for intra or inter prediction without being filtered first. As shown in FIG. 3, the deblocking filter and the SAO module may be eliminated from the encoding loop. Specifically, the frame buffer may be configured to receive and store unfiltered reference pixels located in reference frames. The unfiltered reference pixels may be constructed by combining prediction pixels and prediction residuals that are encoded by the entropy encoder. In the scheme 300, the unfiltered reference pixels may equal their corresponding original pixels.

In an embodiment, both deblocking filtering and SAO are bypassed. If an ALF module is present in the encoder, the scheme 300 may also bypass the AFL module. The scheme 300 may not include any in-loop filtering step, as shown in FIG. 3. Alternatively, a disclosed scheme may bypass a portion of the in-loop filtering step or process. Further, it should be understood that any filter outside the encoding loop, such as a post-loop filter, may still be applied to reconstructed pixels if desired. Further, it should be understood that bypassing or disabling described herein may include equivalent approaches, such as filter-and-replace. For example, a reconstructed pixel (i.e., reference pixel for inter or intra prediction) equaling its corresponding original pixel may be filtered first by an in-loop filter to generate a filtered value. Then, the filtered value may be replaced by the value of the original pixel or unfiltered reconstructed pixels. Thus, in essence the in-loop filter is bypassed or disabled, since no change of value occurred. Although the filter-and-replace approach may lower coding efficiency, it may be used sometimes, e.g., due to ease of software implementation.

When using a lossless coding mode, such as the scheme 300, to code a current block, intra prediction may use external reference pixels (e.g., located in neighboring block of the current block) as well as internal reference pixels (e.g., located inside the current block). Intra prediction may be performed block-by-block or set-by-set within a block. More details on lossless coding are described in U.S. Patent Application No. 13/668,094, filed on November 2, 2012 and entitled "Differential Pulse Code Modulation Intra Prediction for High Efficiency Video Coding" by Wen Gao, et al., which is incorporated herein by reference as if reproduced in its entirety.

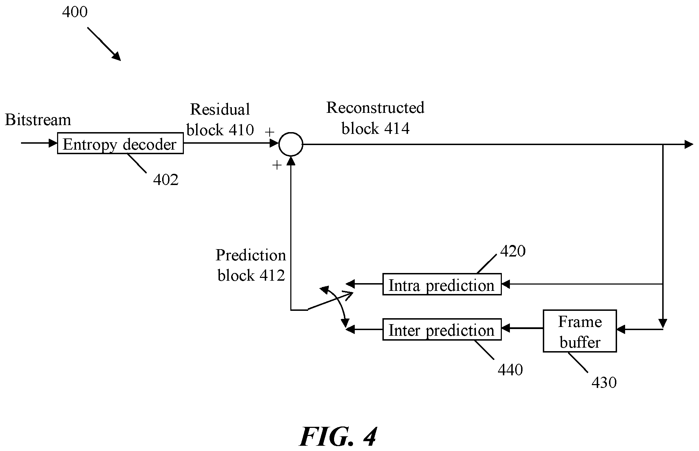

FIG. 4 is a schematic diagram of an embodiment of an in-loop filtering bypass decoding scheme 400, which may be implemented by a video decoder and correspond to the encoding scheme 300. One skilled in the art will recognize that various aspects of the scheme 400 (e.g., the bitstream, intra prediction, inter prediction, etc.) may be substantially similar to the scheme 300, thus in the interest of conciseness, further descriptions may focus on the aspects that are different. In operation, a bitstream containing encoded residual pixels may be received by an entropy decoder 402, which may decode the bitstream to an uncompressed format. The entropy decoder 402 may employ any entropy decoding algorithm, such as CABAC decoding, TR coding, EG decoding, or fixed length encoding, or any combination thereof.

For a current block being decoded, a residual block 410 may be generated after the execution of the entropy decoder 402. In addition, information containing a prediction mode of the current block may also be decoded by the entropy decoder 402. The residual block 410 comprising residual pixels may be combined with a prediction block 412 to form a reconstructed block 414. Since no lossy operation (e.g., de-quantization, inverse transform) is involved in the scheme 400, the reconstructed block 414 may have pixels that are exactly the same with a corresponding original block from which the reconstructed block 414 originated from. Note that the corresponding original block is not included in the decoder, rather it was relevant to the encoder. The reconstructed block 414 may be sent to a video device or player for video playback.

Further, to facilitate continuous decoding of video frames, the reconstructed block 414 may also serve as reference for inter or intra prediction of future pixels or blocks. In an embodiment, the scheme 400 bypasses or disables all and any in-loop filtering step or process. Bypassed filtering may include deblocking filter, SAO, and/or ALF. As shown in FIG. 4, pixels in the unfiltered reconstructed block 414 may be used directly as reference pixels by an intra prediction module 420 for intra prediction. The reconstructed block 414 may also be fed into a frame buffer 430, and then be used by an inter prediction module 440 for inter prediction. Functioning of the intra prediction module 420, the frame buffer 430, and the inter prediction module 440 may be the same or similar to their counterparts in the encoding scheme 300.

In this disclosure, a process (e.g., in a video codec or processor) may be configured to implement one or more disclosed schemes. In an embodiment, bypassing an in-loop filtering process may be selectively based on an indicator, which may be signaling element assigned to each block (e.g., CU). When the indicator indicates that a block in which the reconstructed block resides in has been coded in a lossless mode (e.g., the scheme 300 or 400), a processor may check status of the indicator and elect to bypass or disable the in-loop filtering. Otherwise, if the indicator indicates that a block in which the reconstructed block resides in has been coded in a lossy mode (e.g., the scheme 100), the processor may check status of the indicator and elect to preserve or include or use the in-loop filtering. Various signaling elements or methods may be used to realize such an indicator. Exemplary indicators to determine filtering bypass may include flag, quantization parameter (QP), other syntax element on the level of CU, etc.

In implementation, a flag may be assigned to a block (e.g., a CU) to signal or indicate whether the block has been coded in a lossless mode or a lossy mode. For example, the flag may be set to a binary value of' 1' if its corresponding CU was coded in a lossless scheme, or set to '0' if the CU was coded in a lossy scheme. Note that the binary values or other type of values may be arbitrarily set to have the same indication. For example, the flag may be set to ' 1' for lossy coding and '0' for lossless coding. Since both transform and quantization may be bypassed in a lossless scheme described herein, the signaling flag may be denoted as cu_transquant_bypass_flag. In a picture, it is possible for a portion of the CUs to have a cu_transquant_bypass_flag=1, and another portion of the CUs to have a cu_transquant_bypass_flag=0 or no cu transquant bypass flag at all.

In an embodiment, the flag may be further used to indicate the bypassing of in-loop filtering. The indication of in-loop filtering bypass may be fulfilled on the same level as the indication of lossless coding. For example, if each CU is assigned with a flag to indicate its lossless/lossy coding, the filtering bypass indication may also be set on the CU level. In an embodiment, a cu transquant bypass flag equal to '1' specifies that the transform, quantization, inverse transform, de-quantization, and in-loop filtering processes are bypassed (e.g., as in scheme 300). It should be noted that if the cu_transquant_bypass_flag is not present at all, it may be inferred to as '0', in which case these processes may still be carried out (e.g., as in scheme 100). In a picture, it is possible that in-loop filtering may be bypassed for a portion of the CUs and performed for another portion of the CUs.

The bypass flag may be included into a bitstream as a syntax element, wherein the bitstream also comprises encoded prediction residuals. For example, if the prediction residuals are encoded in a CU syntax, the bypass flag may then be encoded as an one-bit element of the CU syntax. Depending on the implementations, part of the in-loop filtering steps may still be performed in the scheme 300 or 400, except the step in which reference pixel values are actually altered.

There may be a variety of approaches to implement signaling mechanisms (e.g., using cu_transquant_bypass_flag or QP) to disable the in-loop filtering for a block employing a lossless coding mode. For example, the in-loop filtering process may be carried as usual until a final step in which the modification of samples of a block actually occurs. Preceding steps such as determining need for filtering, setting of filtering strength, may be performed as desired. In the final step, the encoder/decoder check the value of the cu_transquant_bypass_flag of the block. If cu transquant bypass flag =1, the final step (i.e.., actual modification step) may be bypassed. This approach may be used in, e.g., a deblocking filter. For another example, the in-loop filtering process may be carried out as desired. After the process is done, the encoder/decoder check whether the cu transquant bypass flag of a CU is equal to 1. If so, the original pixel values or unfiltered reconstructed pixel values are used to replace the filtered pixels in the CU. Thus the in-loop filtering process is effectively disabled or bypassed. This approach may be used in, e.g., a SAO filter.

For yet another example, before performing any in-loop filtering operation, the cu transquant bypass flag of a CU may be checked and determined. If cu_transquant_bypass_flag=1, all in-loop filtering steps or processes may be bypassed or skipped. This approach may be used in any filter or filtering module, such as a deblocking filter, a SAO filter, and/or an ALF filter.

From the example of cu transquant bypass flag, it can be understood that any other type of indicator, such as QP, may be used to determine whether to bypass in-loop filtering or not. QP=0 (or QP = a lowest available QP value) may be used to signal that a block in which reconstructed pixels reside is coded using a lossless coding mode, thus checking of QP=0 (or QP = the lowest QP value) may enable selective bypassing of in-loop filtering for a block (e.g., a CU).

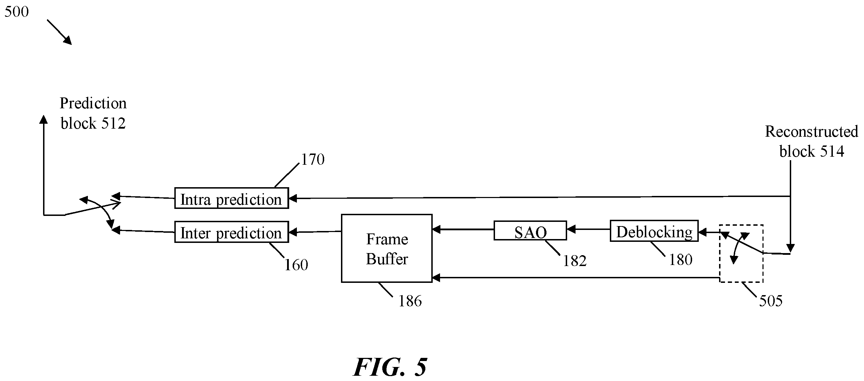

FIG. 5 is a schematic diagram of an embodiment of an in-loop filtering bypassing scheme 500, which may be implemented by a video encoder or may represent a functional diagram of an encoder. Note that the in-loop filtering bypassing scheme 500 may also be implemented by a video decoder or may represent a functional diagram of a decoder. The bypassing scheme 500 may represent part of an coding scheme, and a remainder of the coding scheme may be found in other schemes, such as encoding scheme 100. One skilled in the art will recognize that various aspects of the scheme 500 (e.g., the intra prediction module 170, the inter prediction module 160, the frame buffer 186, the SAO module 182, and the deblocking filter 180) may be substantially similar to the scheme 100 or scheme 200, thus in the interest of conciseness, further descriptions may focus primarily on the aspects that are different. The encoding scheme 500 may have a bypass module 505, such as a switch, for selecting between two paths to selectively bypass the in-loop filtering comprising the deblocking filter 180 and the SAO module 182. The bypass module 505 may use an indicator or flag to determine whether to bypass the in-loop filtering as described previously. For example, if the flag is set to one binary value, the bypass module 505 may send a reconstructed block 514 directly to the frame buffer 186 thereby bypassing the in-loop filtering. However, if the flag is set to a different binary value, the bypass module may send a reconstructed block 514 to the deblocking filter 180 followed by the SAO module 182. The reconstructed block 514 may be generated as the reconstructed block 154 of FIG. 1 or as the reconstructed block 314 of FIG. 3. In this manner, a prediction block 512 may be generated. The prediction block 512 may be used to generate a reconstructed block as described with respect to FIGS. 1-3.

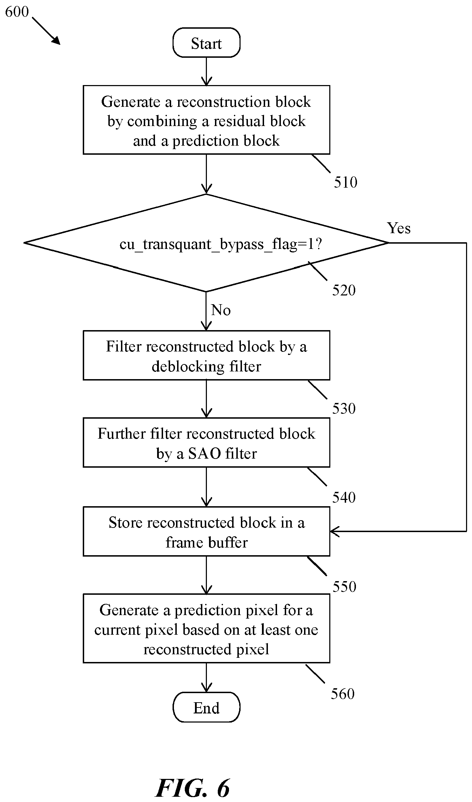

FIG. 6 is a flowchart of an embodiment of an in-loop filtering bypass coding method 600, which may be implemented in a codec. The method 600 may start in step 510, where residual pixels located in a residual block and prediction pixels located in a prediction block may be combined, e.g., by addition, to generate or form reconstructed pixels of a reconstructed block. Note that the reconstructed block may be an exact (lossless) or approximate (lossy) version of its corresponding original block, from which the reconstructed block is generated. In step 520, the method 600 may check an indicator assigned to the reconstructed block, e.g., a flag denoted as cu_transquant_bypass_flag, to determine whether cu_transquant_bypass_flag=1. If the condition in step 520 is met, the method 600 may proceed to step 550; otherwise, the method 600 may proceed to step 530. By executing the step 520, selective bypassing or disabling of an in-loop filtering step comprising one or more filters may be realized. Note that if the cu transquant bypass flag does not exist, it may be inferred as being 0.

In step 530, the reconstructed block may be filtered by a deblocking filter. In step 540, the reconstructed block may be filtered by a SAO module or filter. In step 550, the reconstructed block (now possibly a filtered block) may be stored in a frame buffer. The reconstructed block stored in step 550 may be filtered (if cu_transquant_bypass_flag≠1 in block 520), in which case it may be referred to as a filtered reconstructed block (or a reconstructed and filtered block). Otherwise, the reconstructed block stored in step 550 may be unfiltered (if cu_transquant_bypass_flag=1 in block 520), in which case it may be referred to as an unfiltered reconstructed block (or a reconstructed and unfiltered block). In step 560, at least one reconstructed pixel in the reconstructed block may be used as reference pixels to generate a prediction pixel for a current pixel. The same reference pixel(s) may be used to generate one or more prediction pixels in a current block.

It should be understood that the method 600 may be modified within scope of this disclosure. For example, the step 550 may not be needed or may be changed if prediction is intra instead of inter. Further, the method 600 may only include a portion of all necessary coding steps, thus other steps, such as scanning, encoding, and transmitting, may also be incorporated into the coding process wherever appropriate.
Example 1. An apparatus comprising:
   a processor configured to:
   generate a reconstructed pixel;
   selectively bypass at least one in-loop filter on the reconstructed pixel; and
   generate a prediction pixel for a current pixel using at least the reconstructed pixel when the at least one in-loop filter is bypassed.
Example 2. The apparatus of example 1, wherein generating the reconstructed pixel is based on a corresponding residual pixel and a corresponding prediction pixel, wherein the corresponding residual pixel represents a difference between the corresponding prediction pixel and a corresponding original pixel, and wherein a value of the reconstructed pixel equals a value of the corresponding original pixel when the at least one in-loop filter is bypassed.
Example 3. The apparatus of example 2, wherein bypassing the at least one in-loop filter occurs if transform and quantization steps on the corresponding residual pixel are bypassed by the processor. Example 4. The apparatus of example 2, wherein the corresponding original pixel is located in a coding unit (CU), and wherein the reconstructed pixel is located in a reference frame, and wherein generating the prediction pixel uses the reference frame for inter-frame prediction.
Example 5. The apparatus of example 2, wherein the at least one in-loop filter comprises a deblocking filter.
Example 6. The apparatus of example 5, wherein the at least one in-loop filter further comprises a sample adaptive offset (SAO) filter.
Example 7. The apparatus of example 1, wherein the reconstructed pixel belongs to a reconstructed block generated based on a residual block, wherein selectively bypassing the at least one in-loop filter is based on an indicator, and wherein the indicator is determined by a coding mode of the residual block.
Example 8. The apparatus of example 7, wherein the indicator is a flag indicating whether the coding mode is a lossless mode or a lossy mode, and wherein bypassing the at least one in-loop filter occurs when the coding mode is the lossless mode.
Example 9. The apparatus of example 8, wherein the flag being '1' indicates the lossless mode, and wherein the flag being '0' indicates the lossy mode.
Example 10. The apparatus of example 7, wherein the processor is further configured to:
   generate the residual pixel by computing a difference between an original block and a corresponding prediction block; and
   perform entropy encoding on the residual block to generate an encoded residual block.
Example 11. The apparatus of example 7, wherein the processor is further configured to perform entropy decoding on an encoded residual block to generate the residual block.
Example 12. A method of video coding comprising:
   generating a reconstructed pixel;
   selectively bypassing an in-loop filtering step on the reconstructed pixel; and
   generating a prediction pixel for a current pixel using at least the reconstructed pixel when the in-loop filtering step is bypassed.
Example 13. The method of example 12, wherein generating the reconstructed pixel is based on a corresponding residual pixel and a corresponding prediction pixel, wherein the corresponding residual pixel represents a difference between the corresponding prediction pixel and a corresponding original pixel, and wherein a value of the reconstructed pixel equals a value of the corresponding original pixel when the in-loop filtering step is bypassed.
Example 14. The method of example 13, wherein the corresponding original pixel is located in a coding unit (CU), and wherein generating the prediction pixel uses inter-frame prediction.
Example 15. The method of example 13, wherein the in-loop filtering step comprises deblocking and sample adaptive offset (SAO) filtering.
Example 16. The method of example 12, wherein the reconstructed pixel belongs to a reconstructed block generated based on a residual block, wherein selectively bypassing the in-loop filtering step is based on an indicator, and wherein the indicator is determined by a coding mode of the residual block.
Example 17. The method of example 16, wherein the indicator is a flag indicating whether the coding mode is a lossless mode or a lossy mode, and wherein bypassing the in-loop filtering step occurs when the coding mode is the lossless mode.
Example 18. An apparatus comprising:
   a processor configured to: determine whether a residual block is coded in a lossless mode; generate a reconstructed block based on the residual block; if the residual block has been coded in the lossless mode, disable an in-loop filtering step on the reconstructed block; and predict a current pixel by directly using at least one reconstructed pixel in the reconstructed block as reference; and otherwise,
   perform the in-loop filtering step on the reconstructed block to generate a filtered block; and
   predict the current pixel by using at least one filtered pixel in the filtered block as reference.
Example 19. The apparatus of example 18, wherein determining the lossless mode is based on a flag regarding the residual block.
Example 20. The apparatus of example 18, wherein if the residual block has been coded in the lossless mode, no transform, quantization, inverse transform, or de-quantization operation is performed by the processor in generating the reconstructed pixel.

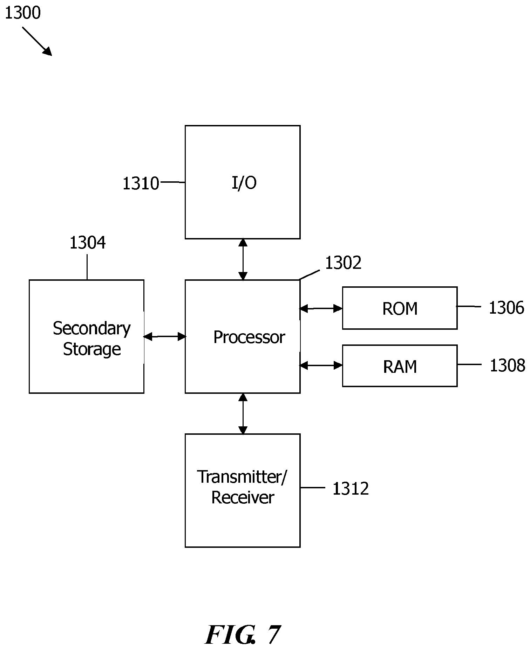

The schemes described above may be implemented on a network component, such as a computer or network component with sufficient processing power, memory resources, and network throughput capability to handle the necessary workload placed upon it. FIG. 7 is a schematic diagram of an embodiment of a network component or node 1300 suitable for implementing one or more embodiments of the methods disclosed herein, such as the lossy encoding scheme 100, the lossless encoding scheme 200, the in-loop filtering bypass encoding scheme 300, the in-loop filtering bypass decoding scheme 400, the in-loop filtering bypass encoding scheme 500, and the in-loop filtering bypass coding method 600. Further, the network node 1300 may be configured to implement any of the apparatuses described herein, such as a video encoder and/or video decoder.

The network node 1300 includes a processor 1302 that is in communication with memory devices including secondary storage 1304, read only memory (ROM) 1306, random access memory (RAM) 1308, input/output (I/O) devices 1310, and transmitter/receiver 1312. Although illustrated as a single processor, the processor 1302 is not so limited and may comprise multiple processors. The processor 1302 may be implemented as one or more central processor unit (CPU) chips, cores (e.g., a multi-core processor), field-programmable gate arrays (FPGAs), application specific integrated circuits (ASICs), and/or digital signal processors (DSPs), and/or may be part of one or more ASICs. The processor 1302 may be configured to implement any of the schemes described herein, including the lossy encoding scheme 100, the lossless encoding scheme 200, the in-loop filtering bypass encoding scheme 300, the in-loop filtering bypass decoding scheme 400, and the in-loop filtering bypass coding method 600. The processor 1302 may be implemented using hardware or a combination of hardware and software.

The secondary storage 1304 is typically comprised of one or more disk drives or tape drives and is used for non-volatile storage of data and as an over-flow data storage device if the RAM 1308 is not large enough to hold all working data. The secondary storage 1304 may be used to store programs that are loaded into the RAM 1308 when such programs are selected for execution. The ROM 1306 is used to store instructions and perhaps data that are read during program execution. The ROM 1306 is a non-volatile memory device that typically has a small memory capacity relative to the larger memory capacity of the secondary storage 1304. The RAM 1308 is used to store volatile data and perhaps to store instructions. Access to both the ROM 1306 and the RAM 1308 is typically faster than to the secondary storage 1304.

The transmitter/receiver 1312 may serve as an output and/or input device of the network node 1300. For example, if the transmitter/receiver 1312 is acting as a transmitter, it may transmit data out of the network node 1300. If the transmitter/receiver 1312 is acting as a receiver, it may receive data into the network node 1300. The transmitter/receiver 1312 may take the form of modems, modem banks, Ethernet cards, universal serial bus (USB) interface cards, serial interfaces, token ring cards, fiber distributed data interface (FDDI) cards, wireless local area network (WLAN) cards, radio transceiver cards such as code division multiple access (CDMA), global system for mobile communications (GSM), long-term evolution (LTE), worldwide interoperability for microwave access (WiMAX), and/or other air interface protocol radio transceiver cards, and other well-known network devices. The transmitter/receiver 1312 may enable the processor 1302 to communicate with an Internet or one or more intranets. I/O devices 1310 may include a video monitor, liquid crystal display (LCD), touch screen display, or other type of video display for displaying video, and may also include a video recording device for capturing video. I/O devices 1310 may also include one or more keyboards, mice, or track balls, or other well-known input devices.

It is understood that by programming and/or loading executable instructions onto the network node 1300, at least one of the processor 1302, the secondary storage 1304, the RAM 1308, and the ROM 1306 are changed, transforming the network node 1300 in part into a particular machine or apparatus (e.g., a video codec having the functionality taught by the present disclosure). The executable instructions may be stored on the secondary storage 1304, the ROM 1306, and/or the RAM 1308 and loaded into the processor 1302 for execution. It is fundamental to the electrical engineering and software engineering arts that functionality that can be implemented by loading executable software into a computer can be converted to a hardware implementation by well-known design rules. Decisions between implementing a concept in software versus hardware typically hinge on considerations of stability of the design and numbers of units to be produced rather than any issues involved in translating from the software domain to the hardware domain. Generally, a design that is still subject to frequent change may be preferred to be implemented in software, because re-spinning a hardware implementation is more expensive than re-spinning a software design. Generally, a design that is stable that will be produced in large volume may be preferred to be implemented in hardware, for example in an application specific integrated circuit (ASIC), because for large production runs the hardware implementation may be less expensive than the software implementation. Often a design may be developed and tested in a software form and later transformed, by well-known design rules, to an equivalent hardware implementation in an application specific integrated circuit that hardwires the instructions of the software. In the same manner as a machine controlled by a new ASIC is a particular machine or apparatus, likewise a computer that has been programmed and/or loaded with executable instructions may be viewed as a particular machine or apparatus.

At least one embodiment is disclosed and variations, combinations, and/or modifications of the embodiment(s) and/or features of the embodiment(s) made by a person having ordinary skill in the art are within the scope of the disclosure. Alternative embodiments that result from combining, integrating, and/or omitting features of the embodiment(s) are also within the scope of the disclosure. Where numerical ranges or limitations are expressly stated, such express ranges or limitations should be understood to include iterative ranges or limitations of like magnitude falling within the expressly stated ranges or limitations (e.g., from about 1 to about 10 includes, 2, 3, 4, etc.; greater than 0.10 includes 0.11, 0.12, 0.13, etc.). For example, whenever a numerical range with a lower limit, Ri, and an upper limit, Rᵤ, is disclosed, any number falling within the range is specifically disclosed. In particular, the following numbers within the range are specifically disclosed: R = R₁ + k ^{∗} (Rᵤ - R₁), wherein k is a variable ranging from 1 percent to 100 percent with a 1 percent increment, i.e., k is 1 percent, 2 percent, 3 percent, 4 percent, 5 percent, ..., 70 percent, 71 percent, 72 percent, ..., 95 percent, 96 percent, 97 percent, 98 percent, 99 percent, or 100 percent. Moreover, any numerical range defined by two R numbers as defined in the above is also specifically disclosed. The use of the term "about" means ±10% of the subsequent number, unless otherwise stated. Use of the term "optionally" with respect to any element of a claim means that the element is required, or alternatively, the element is not required, both alternatives being within the scope of the claim. Use of broader terms such as comprises, includes, and having should be understood to provide support for narrower terms such as consisting of, consisting essentially of, and comprised substantially of. Accordingly, the scope of protection is not limited by the description set out above but is defined by the claims that follow, that scope including all equivalents of the subject matter of the claims. Each and every claim is incorporated as further disclosure into the specification and the claims are embodiment(s) of the present disclosure. The discussion of a reference in the disclosure is not an admission that it is prior art, especially any reference that has a publication date after the priority date of this application. The disclosure of all patents, patent applications, and publications cited in the disclosure are hereby incorporated by reference, to the extent that they provide exemplary, procedural, or other details supplementary to the disclosure.

While several embodiments have been provided in the present disclosure, it may be understood that the disclosed systems and methods might be embodied in many other specific forms without departing from the scope of the present disclosure. The present examples are to be considered as illustrative and not restrictive, and the intention is not to be limited to the details given herein. For example, the various elements or components may be combined or integrated in another system or certain features may be omitted, or not implemented.

In addition, techniques, systems, subsystems, and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component whether electrically, mechanically, or otherwise. Other examples of changes, substitutions, and alterations are ascertainable by one skilled in the art and may be made without departing from the scope disclosed herein.

## Claims

1. An apparatus comprising:
a processor configured to:
generate a reconstructed pixel;
selectively bypass at least one in-loop filter on the reconstructed pixel; and
generate a prediction pixel for a current pixel using at least the reconstructed pixel when the at least one in-loop filter is bypassed;
wherein the reconstructed pixel belongs to a reconstructed block generated based on a residual block, wherein selectively bypassing the at least one in-loop filter is based on an indicator, and wherein the indicator is determined by a coding mode of the residual block.

2. The apparatus of claim 1, wherein generating the reconstructed pixel is based on a corresponding residual pixel and a corresponding prediction pixel, wherein the corresponding residual pixel represents a difference between the corresponding prediction pixel and a corresponding original pixel, and wherein a value of the reconstructed pixel equals a value of the corresponding original pixel when the at least one in-loop filter is bypassed.

3. The apparatus of claim 2, wherein bypassing the at least one in-loop filter occurs if transform and quantization steps on the corresponding residual pixel are bypassed by the processor.

4. The apparatus of claim 2, wherein the corresponding original pixel is located in a coding unit (CU), and wherein the reconstructed pixel is located in a reference frame, and wherein generating the prediction pixel uses the reference frame for inter-frame prediction.

5. The apparatus of claim 2, wherein the at least one in-loop filter comprises a deblocking filter.

6. The apparatus of claim 5, wherein the at least one in-loop filter further comprises a sample adaptive offset (SAO) filter.

7. The apparatus of claim 1, wherein the indicator is a flag indicating whether the coding mode is a lossless mode or a lossy mode, and wherein bypassing the at least one in-loop filter occurs when the coding mode is the lossless mode.

8. The apparatus of claim 7, wherein the flag being '1' indicates the lossless mode, and wherein the flag being '0' indicates the lossy mode.

9. A method of video coding comprising:
generating a reconstructed pixel;
selectively bypassing an in-loop filtering step on the reconstructed pixel; and
generating a prediction pixel for a current pixel using at least the reconstructed pixel when the in-loop filtering step is bypassed;
wherein the reconstructed pixel belongs to a reconstructed block generated based on a residual block, wherein selectively bypassing the in-loop filtering step is based on an indicator, and wherein the indicator is determined by a coding mode of the residual block.

10. The method of claim 9, wherein generating the reconstructed pixel is based on a corresponding residual pixel and a corresponding prediction pixel, wherein the corresponding residual pixel represents a difference between the corresponding prediction pixel and a corresponding original pixel, and wherein a value of the reconstructed pixel equals a value of the corresponding original pixel when the in-loop filtering step is bypassed.

11. The method of claim 10, wherein the corresponding original pixel is located in a coding unit (CU), and wherein generating the prediction pixel uses inter-frame prediction.

12. The method of claim 10, wherein the in-loop filtering step comprises deblocking and sample adaptive offset (SAO) filtering.

13. The method of claim 9, wherein the indicator is a flag indicating whether the coding mode is a lossless mode or a lossy mode, and wherein bypassing the in-loop filtering step occurs when the coding mode is the lossless mode.

14. An apparatus comprising:
a processor configured to:
determine whether a residual block is coded in a lossless mode;
generate a reconstructed block based on the residual block;
if the residual block has been coded in the lossless mode,
disable an in-loop filtering step on the reconstructed block; and
predict a current pixel by directly using at least one reconstructed pixel in the reconstructed block as reference; and
otherwise,
perform the in-loop filtering step on the reconstructed block to generate a filtered block; and predict the current pixel by using at least one filtered pixel in the filtered block as reference.

15. The apparatus of claim 14, wherein determining the lossless mode is based on a flag regarding the residual block.
